# FASCICULE DE BREVET EUROPEEN

(11) **EP 2 071 129 B1**
(45) Date de publication et mention de la délivrance du brevet: **31.05.2017**
(21) Numéro de dépôt: 08167794.0
(22) Date de dépôt: 29.10.2008
(51) Int. Cl.: F01D 9/04, F01D 5/22, F01D 5/26

(54) **Distributeur sectorisé pour une turbomachine**
In Sektoren unterteilter Verteiler für ein Turbotriebwerk
Sectorised distributor for a turbomachine

(30) Priorité: 14.12.2007 FR 0708714
(43) Date de publication de la demande: 17.06.2009
(73) Titulaire: Snecma, 75015 Paris (FR)
(72) Inventeur: Girard, Patrick Joseph Marie, 77310 Saint Fargeau Ponthierry (FR); Lescure, Xavier, Firmin, Camille, Jean, 92100, Boulogne Billancourt (FR); Massot, Aurélien, René-Pierre, 77000, Vaux Le Penil (FR); Prestel, Sebastien, Jean, Laurent, 91290, Arpajon (FR)
(74) Mandataire: Ramey, Daniel

(56) Documents cités:
- EP-A- 1 431 517
- DE-A1- 3 942 785
- DE-A1- 4 017 861
- US-A- 4 285 633

## Description

La présente invention concerne un distributeur sectorisé, en particulier pour une turbine basse-pression d'un turboréacteur ou d'un turbopropulseur d'avion.

Le document DE 39 42 785 A1 décrit une roue à aubage comportant deux anneaux entre lesquels s'étendent des aubes, cette roue comportant plusieurs découpes en forme de « Z » s'étendant axialement sur toute la largeur du second anneau.

Le brevet US-A-4 285 633 décrit une rangée annulaire d'aubes de stator qui s'étendent entre deux anneaux cylindriques, ces anneaux étant sectorisés et ayant à leurs extrémités circonférentielles des bords longitudinaux en ligne droite.

Une turbine de ce type comprend des étages comportant chacun une roue à aubes et un distributeur, chaque distributeur étant sectorisé et formé de plusieurs secteurs de distributeur disposés circonférentiellement bout à bout.

Chaque secteur de distributeur comporte deux secteurs de plates-formes annulaires s'étendant l'un à l'intérieur de l'autre et reliés entre eux par des pales sensiblement radiales. La plate-forme externe comporte des moyens d'accrochage sur un carter externe de la turbine. Le secteur de distributeur comprend un secteur de rail annulaire pour le support d'éléments en matériau abradable, ce rail étant situé radialement à l'intérieur de la plate-forme interne du distributeur et étant raccordé à la surface interne de cette plate-forme. Les éléments en matériau abradable coopèrent avec des léchettes annulaires portées par le rotor de la turbine pour former des joints d'étanchéité du type à labyrinthe.

Les secteurs de distributeur sont séparés les uns des autres par de faibles jeux en direction circonférentielle pour autoriser des dilatations thermiques de leurs plates-formes en fonctionnement de la turbine.

Ils sont soumis en fonctionnement à des vibrations et à des sollicitations dynamiques relativement importantes qui peuvent entraîner de petits déplacements parasites des secteurs de distributeur et des déformations de ces secteurs, en particulier en torsion.

On a déjà proposé de rigidifier le distributeur à l'aide de moyens d'appui axial formés sur les secteurs de plate-forme interne du distributeur, les moyens d'appui d'un secteur de plate-forme étant destinés à coopérer avec des moyens correspondants formés sur des secteurs de plate-forme interne adjacents pour limiter les déformations du distributeur en fonctionnement.

Dans la technique actuelle, chaque secteur de plate-forme interne comprend des bords longitudinaux découpés sensiblement en Z qui sont complémentaires des bords longitudinaux correspondants des secteurs de plate-forme interne adjacents. Chaque bord longitudinal en Z d'un secteur de plate-forme comprend deux parties d'extrémité parallèles d'orientation longitudinale qui sont décalées en direction circonférentielle et qui sont reliées l'une à l'autre par une bordure perpendiculaire destinée à venir en appui axial sur une bordure correspondante d'un secteur de plate-forme adjacent en fonctionnement de la turbine de façon à limiter les déplacements parasites et les déformations précités du distributeur.

Cependant, cette technologie présente des inconvénients. Les bords longitudinaux de chaque secteur de plate-forme doivent être usinés pour former ces découpes en Z. Cet usinage est une opération délicate qui risque de détériorer le distributeur. L'usinage de ces bords longitudinaux consiste notamment à réaliser une première coupe pour former une bordure d'appui et une seconde coupe pour relier cette bordure d'appui à un bord circonférentiel amont ou aval de la plate-forme interne. Ces coupes sont réalisées à proximité des pales du distributeur, dont les courbures peuvent gêner plus ou moins l'opération d'usinage. Enfin, cette technologie n'est applicable qu'à des plates-formes internes de distributeur relativement planes et ne peut pas être généralisée à tout type de distributeur ou de secteur de distributeur.

La présente invention a notamment pour but d'apporter une solution simple, efficace et économique aux problèmes de la technique antérieure.

Elle propose à cet effet un distributeur sectorisé pour une turbomachine, formé de secteurs cylindriques placés bout à bout et comportant chacun deux secteurs coaxiaux de plates-formes annulaires reliés entre eux par des pales sensiblement radiales, et un secteur de rail annulaire de support d'éléments en matériau abradable, le secteur de rail étant radialement à l'intérieur du secteur de plate-forme interne et raccordé à la surface interne de ce secteur de plate-forme, chaque secteur de distributeur comprenant sur les bords longitudinaux du secteur de plate-forme interne des moyens d'encastrement circonférentiel coopérant avec des moyens correspondants prévus sur un secteur de distributeur adjacent, caractérisé en ce que les bords longitudinaux des secteurs de plate-forme interne forment un V.

Selon l'invention, les bords longitudinaux des secteurs de plate-forme interne sont en V au lieu d'être en Z. Ces bords longitudinaux sont donc désormais définis par deux bordures, contre trois dans la technique antérieure. Les bords longitudinaux ont donc une forme plus simple et leur usinage est plus simple et plus rapide car il consiste à réaliser une seule coupe oblique sur chaque bord longitudinal des secteurs de plate-forme, contre deux coupes dans la technique antérieure (une coupe en direction circonférentielle et une coupe longitudinale).

Préférentiellement, le secteur de plate-forme interne de chaque secteur de distributeur comprend un premier bord longitudinal en V à angle au sommet supérieur à 180° et un second bord longitudinal opposé à angle au sommet inférieur à 180°. Le premier bord longitudinal de chaque secteur de plate-forme peut avoir une forme complémentaire de son second bord longitudinal et tous les secteurs de plate-forme interne peuvent être identiques de façon à simplifier la fabrication des secteurs de distributeur et à pouvoir encastrer les bords longitudinaux des secteurs de plate-forme interne les uns dans les autres lors de l'accrochage des secteurs de distributeur sur le carter de turbine.

Chaque bord longitudinal de chaque secteur de plate-forme interne comprend par exemple une partie amont sensiblement parallèle à l'axe de révolution du distributeur, et une partie aval oblique par rapport à cet axe. La partie aval oblique d'un des bords longitudinaux du secteur de plate-forme interne peut être sensiblement parallèle à la partie aval de l'extrados de la pale adjacente à ce bord longitudinal. La partie aval de ce bord longitudinal suit donc en partie la courbure de la pale située à proximité de ce bord longitudinal. La réalisation de cette partie aval par usinage ne risque pas d'abîmer cette pale car l'outil de coupe est plus éloigné de la pale et est déplacé dans une direction parallèle à la courbure de la pale, de sorte qu'il ne risque pas de venir au contact de cette pale.

La partie aval oblique d'un bord longitudinal du secteur de plate-forme interne est sensiblement parallèle à la partie aval oblique de l'autre bord longitudinal de ce secteur de plate-forme, de façon à ce que les bords longitudinaux des secteurs de plate-forme soient complémentaires les uns des autres.

Selon une autre caractéristique de l'invention, le secteur de rail de chaque secteur de distributeur comprend, à l'une de ses extrémités circonférentielles, des moyens d'appui axial sur le secteur de rail d'un secteur de distributeur adjacent. Les moyens d'appui axial entre les secteurs de distributeur ne sont donc plus formés sur les secteurs de plate-forme interne mais sont déportés sur les secteurs du rail de support des éléments abradables, ce qui est très avantageux pour les raisons suivantes.

Les moyens d'appui axial sont situés radialement à l'intérieur de la plate-forme interne du distributeur et leurs formes et dimensions ne sont pas limitées par rapport à celles de la plate-forme interne. Ces moyens d'appui sont portés par ou formés sur les secteurs de rail du distributeur, et peuvent être formés d'une seule pièce avec ce secteur de rail par usinage ou de fonderie, ou bien être rapportés et fixés sur ce secteur de rail.

La présente invention n'est par ailleurs pas limitée à un type particulier de distributeur ou de secteur de distributeur.

Le secteur de rail a en section une forme sensiblement en L et comprend une paroi sensiblement radiale reliée à sa périphérie externe à la surface interne d'un secteur de plate-forme interne, et à sa périphérie interne à une extrémité d'un secteur de paroi sensiblement cylindrique portant des éléments en matériau abradable, les moyens d'appui axial du secteur de rail étant préférentiellement portés par sa paroi radiale.

Les moyens d'appui peuvent être formés sur la face amont de la paroi radiale du rail. Dans ce cas, les moyens d'appui axial s'opposent aux déformations en torsion des secteurs de distributeur dues notamment aux efforts aérodynamiques appliqués sur les pales de ces secteurs en fonctionnement. En variante, les moyens d'appui sont formés sur la face aval de la paroi radiale externe du rail.

Selon une autre caractéristique de l'invention, chaque secteur de rail comprend au moins une patte latérale s'étendant en direction circonférentielle vers un secteur de rail adjacent et comprenant une face d'appui axial sur ce secteur de rail adjacent. Cette face d'appui axial est sensiblement perpendiculaire à l'axe de révolution de distributeur, et est orientée vers l'amont ou vers l'aval.

L'invention concerne également une turbine basse-pression de turbomachine, comprenant au moins un distributeur sectorisé du type précité, ainsi qu'une turbomachine, telle qu'un turboréacteur ou un turbopropulseur d'avion, comprenant au moins un distributeur tel que décrit ci-dessus.

L'invention sera mieux comprise et d'autres détails, caractéristiques et avantages de la présente invention apparaîtront plus clairement à la lecture de la description qui suit faite à titre d'exemple non limitatif et en référence aux dessins annexés, dans lesquels :
- la figure 1 est une demi-vue schématique en coupe axiale d'une turbine basse-pression de turbomachine,
- les figures 2 et 3 sont des vues schématiques en perspective d'un secteur de distributeur d'une turbine, selon la technique antérieure à l'invention,
- les figures 4 et 5 sont des vues schématiques partielles en perspective d'un secteur de distributeur d'une turbine selon l'invention.

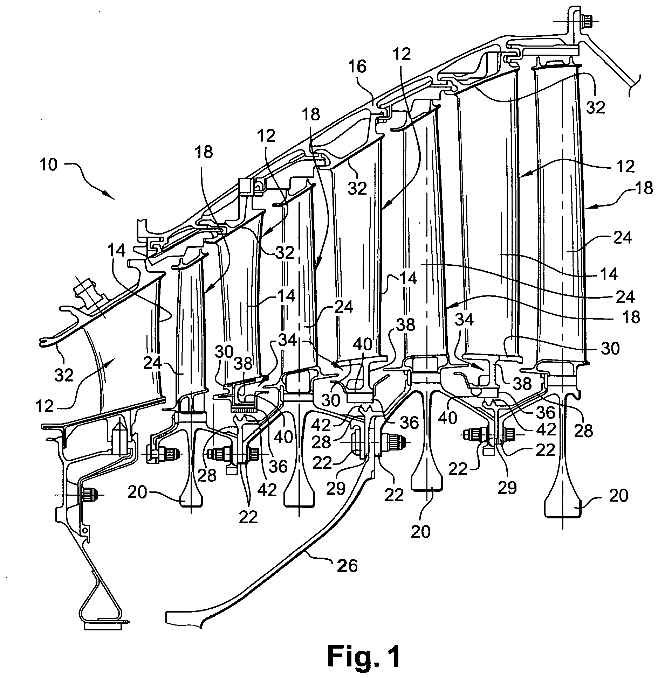

On se réfère d'abord à la figure 1 qui représente une turbine basse-pression 10 de turbomachine comprenant quatre étages comportant chacun un distributeur 12 porté par un carter externe 16 de la turbine et une roue à aubes 18 située en aval du distributeur 12.

Les roues 18 comprennent des disques 20 assemblés coaxialement les uns aux autres par des brides annulaires 22 et portant des aubes 24 sensiblement radiales. Ces roues 18 sont reliées à un arbre de turbine (non représenté) par l'intermédiaire d'un cône d'entraînement 26 fixé sur des brides annulaires 22 des disques.

Des flasques annulaires 28 de retenue axiale des aubes 24 sur les disques 20 sont montés entre les disques et comprennent chacun une paroi radiale interne 29 serrée axialement entre les brides annulaires 22 de deux disques adjacents.

Les distributeurs 12 comprennent chacun deux plates-formes annulaires 30, 32 coaxiales, respectivement interne et externe, qui délimitent entre elles la veine annulaire d'écoulement des gaz dans la turbine et entre lesquelles s'étendent des pales fixes 14 sensiblement radiales. Les plates-formes externes 32 des distributeurs sont accrochées par des moyens appropriés sur le carter externe 16 de la turbine.

Les plates-formes internes 30 des distributeurs sont chacune reliées à un rail annulaire 34 de support d'éléments annulaires 36 en matériau abradable. Chaque rail annulaire 34 est agencé radialement à l'intérieur de la plate-forme interne 30 d'un distributeur et a en section une forme générale en L. Ce rail 34 comprend une paroi annulaire 38 sensiblement radiale qui est reliée à sa périphérie externe à la surface interne de la plate-forme interne 30 du distributeur, et à sa périphérie interne à une extrémité axiale d'une paroi cylindrique 40 de support des éléments abradables 36.

Ces éléments abradables 36 sont agencés radialement à l'extérieur et en regard de léchettes annulaires externes 42 portées par les flasques 28. Les léchettes 42 sont destinées à coopérer par frottement avec les éléments 36 de façon à former des joints à labyrinthe et à limiter le passage d'air en direction axiale à travers ces joints.

Les distributeurs 12 de la turbine sont sectorisés et sont chacun formés de plusieurs secteurs disposés circonférentiellement bout à bout autour de l'axe longitudinal de la turbine.

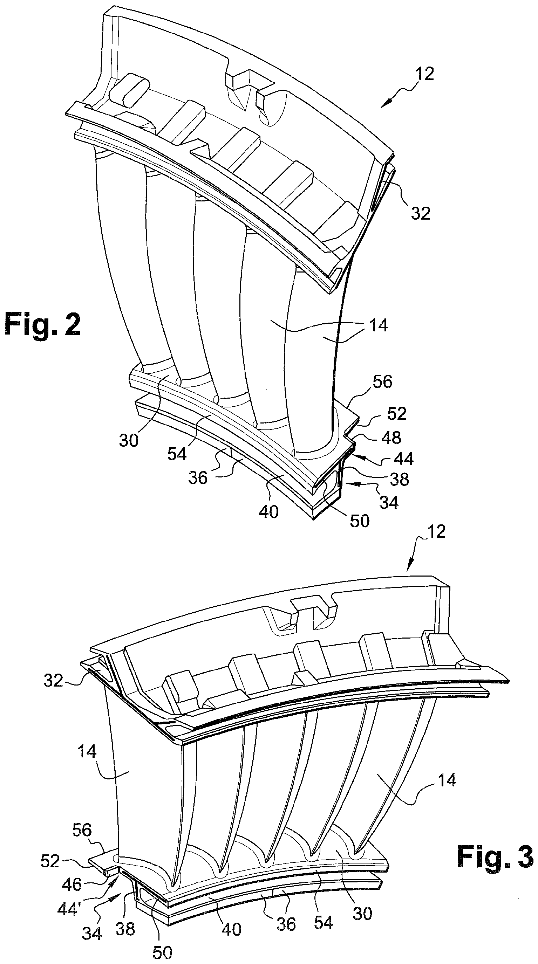

On a représenté en figures 2 et 3 un secteur de distributeur 12 selon la technique antérieure à la présente invention. Ce secteur de distributeur 12 comprend un secteur de plate-forme interne 30 et un secteur de plate-forme externe 32 reliés entre eux par cinq pales 14.

Les bords longitudinaux des secteurs de plates-formes interne 30 et externe 32 ont des formes complémentaires des bords longitudinaux correspondants des secteurs de plates-formes des secteurs de distributeur adjacents de façon à ce que les bords longitudinaux s'encastrent circonférentiellement les uns dans les autres au montage de ce distributeur.

Dans la technique actuelle, les bords longitudinaux 44, 44' des secteurs de plate-forme interne 30 sont usinés en Z pour définir des moyens d'appui axial entre les secteurs de distributeur 12.

Les bords longitudinaux 44, 44' des secteurs de plate-forme interne 30 comprennent chacun une bordure d'appui axial 46 (ou 48) qui est sensiblement perpendiculaire à l'axe longitudinal de la turbine et qui est orientée vers l'amont (bordure 46) - ou vers l'aval (bordure 48) - et est destinée à venir en appui axial contre une bordure d'appui correspondante orientée vers l'aval (bordure 48) - ou vers l'amont (bordure 46) - d'un secteur de plate-forme interne 30 adjacent. Chaque secteur de plate-forme interne 30 comprend à l'une de ses extrémités latérales une bordure d'appui 46 orientée vers l'amont, et à l'autre de ses extrémités latérales une bordure d'appui 48 orientée vers l'aval. L'appui axial d'un secteur de plate-forme interne 30 sur un secteur de plate-forme interne adjacent permet de limiter les déplacements parasites et les vibrations des secteurs de distributeur 12 en fonctionnement de la turbine.

Chaque bordure d'appui 46, 48 est reliée à une première extrémité circonférentielle à l'extrémité aval d'une bordure longitudinale 50 qui s'étend jusqu'au bord circonférentiel amont 54 du secteur de plate-forme 30, sensiblement parallèlement à l'axe longitudinal de la turbine. La seconde extrémité circonférentielle de la face d'appui 46, 48 est reliée à l'extrémité amont d'une seconde bordure longitudinale 52 qui est reliée à son autre extrémité au bord circonférentiel aval 56 du secteur de plate-forme 30. Les bordures 50, 52 sont parallèles entre elles et sont décalées l'une de l'autre en direction circonférentielle d'une distance égale à la dimension circonférentielle de la bordure d'appui 46, 48.

La réalisation par usinage des bords longitudinaux des secteurs de plate-forme interne 30 présente de nombreux inconvénients décrits plus haut. L'invention permet de remédier au moins partiellement à ces problèmes grâce à la simplification des bords longitudinaux des secteurs de plate-forme interne 30 qui sont désormais en V.

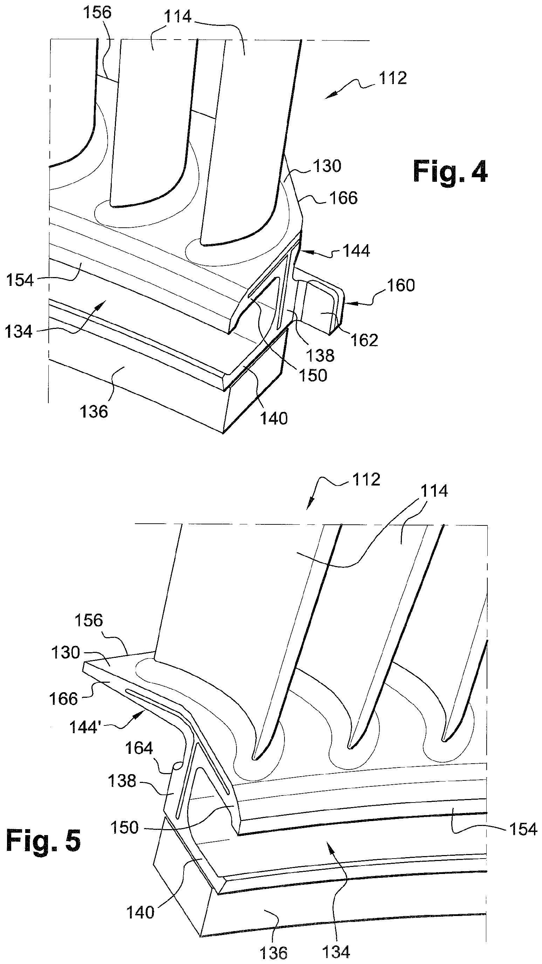

Dans l'exemple de réalisation représenté aux figures 4 et 5, le secteur de plate-forme interne 130 de chaque secteur de distributeur comprend un premier bord longitudinal 144 en V dont l'angle au sommet est supérieur à 180° (figure 4), et est par exemple compris entre 210 et 240°, et un second bord longitudinal 144' en V dont l'angle au sommet est inférieur à 180° (figure 5), et est par exemple compris entre 120 et 150 °.

Le premier bord longitudinal 144 de chaque secteur de plate-forme interne 130 est complémentaire de son second bord longitudinal 144', et les secteurs de plate-forme interne de tous les secteurs de distributeur sont identiques de façon à ce que les bords longitudinaux 144, 144' de chaque secteur de plate-forme 130 puissent s'encastrer dans les bords longitudinaux correspondants des secteurs de plate-forme 130 adjacents.

Les bords longitudinaux 144, 144' de chaque secteur de plate-forme interne 130 comprennent chacun une première bordure 150 ou partie d'extrémité amont qui s'étend dans une direction longitudinale depuis le bord circonférentiel amont 154 du secteur de plate-forme 130 jusqu'au niveau de la liaison entre la paroi radiale 138 du secteur de rail 134 et le secteur de plate-forme 130. Les bords longitudinaux 144, 144' comprennent chacun une seconde bordure 166 ou partie d'extrémité aval qui s'étend de manière oblique par rapport à l'axe longitudinal de la turbine, cette seconde bordure 166 reliant directement l'extrémité aval de la première bordure 150 au bord circonférentiel aval 156 du secteur de plate-forme interne 130. Les secondes bordures 166 des bords longitudinaux 144, 144' du secteur de plate-forme interne 130 sont parallèles entre elles. La bordure 166 du bord longitudinal 144 s'étend sensiblement parallèlement et à faible distance d'une partie d'extrémité de l'extrados de la pale 114 située au voisinage de ce bord 144 (figure 4), et la bordure 166 de l'autre bord longitudinal 144' s'étend sensiblement parallèlement et à faible distance d'une partie d'extrémité de l'intrados de la pale 114 opposée située au voisinage de ce bord 144' (figure 4).

Les bordures obliques 166 des secteurs de plate-forme interne 130 peuvent venir en appui les unes sur les autres de façon à limiter les déformations et les déplacements parasites des secteurs de distributeur en fonctionnement.

Pour augmenter la rigidité du distributeur selon l'invention, le secteur de rail 134 de chaque secteur de distributeur 112 comprend à l'une de ses extrémités circonférentielles une patte latérale 160 d'appui axial sur le secteur de rail d'un secteur de distributeur adjacent. Cette patte 160 a une orientation sensiblement circonférentielle et comprend une première extrémité circonférentielle reliée au secteur de rail 134, au niveau de sa paroi radiale externe 138. La seconde extrémité circonférentielle de la patte 160 comporte une face d'appui axial 162 destinée à coopérer avec une face 164 correspondante de la paroi radiale externe 138 du secteur de rail 134 adjacent, les faces 162, 164 étant sensiblement perpendiculaires à l'axe longitudinal de la turbine.

Dans l'exemple représenté, la patte 160 est située en aval de la paroi radiale 138 du secteur de rail 134 et est reliée par sa première extrémité à une face aval de cette paroi.

La face d'appui 162 de cette patte est orientée vers l'amont et est destinée à venir en appui sur une face 164 orientée vers l'aval de la paroi radiale 138 du secteur de rail 134 adjacent.

En variante, la patte 160 est située en amont de la paroi radiale 138 du secteur de rail et est reliée par une extrémité à une face amont de cette paroi, la face d'appui 162 de cette patte étant orientée vers l'aval et coopérant avec une face 164 orientée vers l'amont de la paroi radiale du secteur de rail 134 adjacent.

Le secteur de rail 134 de chaque secteur de distributeur 112 peut être formé d'une seule pièce de fonderie ou par usinage avec au moins une patte latérale d'appui 160 du type précité. En variante, cette patte latérale 160 est rapportée et fixée sur une extrémité circonférentielle de chaque secteur de rail. N'importe quel type de secteur de distributeur peut être équipé de ce type de patte d'appui.

## Revendications

1. Distributeur sectorisé pour une turbomachine, formé de secteurs cylindriques (112) placés bout à bout et comportant chacun deux secteurs coaxiaux de plates-formes annulaires (130) reliés entre eux par des pales (114) sensiblement radiales, et un secteur de rail annulaire (134) de support d'éléments (136) en matériau abradable, le secteur de rail étant radialement à l'intérieur du secteur de plate-forme interne (130) et raccordé à la surface interne de ce secteur de plate-forme, chaque secteur de distributeur comprenant sur les bords longitudinaux du secteur de plate-forme interne des moyens d'encastrement circonférentiel coopérant avec des moyens correspondants prévus sur un secteur de distributeur adjacent, **caractérisé en ce que** les bords longitudinaux des secteurs de plate-forme interne forment un V.

2. Distributeur sectorisé selon la revendication 1, **caractérisé en ce que** le secteur de plate-forme interne (130) de chaque secteur de distributeur (112) comprend un bord longitudinal en V à angle au sommet supérieur à 180° et un bord longitudinal opposé à angle au sommet inférieur à 180°.

3. Distributeur sectorisé selon la revendication 1 ou 2, **caractérisé en ce que** chaque bord longitudinal de chaque secteur de plate-forme interne (130) comprend une partie amont (150) sensiblement parallèle à l'axe de révolution du distributeur et une partie aval (166) oblique par rapport à cet axe.

4. Distributeur sectorisé selon la revendication 3, **caractérisé en ce que** la partie aval oblique (166) d'un des bords longitudinaux du secteur de plate-forme interne (130) est sensiblement parallèle à la partie aval de l'extrados de la pale (114) adjacente à ce bord longitudinal.

5. Distributeur sectorisé selon la revendication 3 ou 4, **caractérisé en ce que** la partie aval oblique (166) d'un bord longitudinal du secteur de plate-forme interne (130) est sensiblement parallèle à la partie aval oblique de l'autre bord longitudinal de ce secteur de plate-forme.

6. Distributeur sectorisé selon l'une des revendications précédentes **caractérisé en ce que** le secteur de rail (134) de chaque secteur de distributeur (112) comprend, à l'une de ses extrémités circonférentielles, des moyens d'appui axial sur le secteur de rail d'un secteur de distributeur adjacent.

7. Distributeur sectorisé selon la revendication 6, **caractérisé en ce que** le secteur de rail (134) a en section une forme sensiblement en L et comprend une paroi (138) sensiblement radiale reliée à sa périphérie externe à la surface interne d'un secteur de plate-forme interne (130) et à sa périphérie interne à une extrémité d'un secteur de paroi (140) sensiblement cylindrique portant des éléments (136) en matériau abradable, les moyens d'appui axial (160) de ce secteur de rail étant portés par sa paroi radiale.

8. Distributeur sectorisé selon la revendication 7, **caractérisé en ce que** les moyens d'appui (160) sont formés sur la face amont de la paroi radiale (138) du secteur de rail (134).

9. Distributeur sectorisé selon la revendication 7, **caractérisé en ce que** les moyens d'appui (160) sont formés sur la face aval de la paroi radiale (138) du secteur de rail (134).

10. Distributeur sectorisé selon l'une des revendications précédentes, **caractérisé en ce que** chaque secteur de rail (134) comprend au moins une patte latérale (160) s'étendant en direction circonférentielle vers un secteur de rail (134) adjacent et comprenant une face (162) d'appui axial sur ce secteur de rail adjacent.

11. Distributeur sectorisé selon la revendication 10, **caractérisé en ce que** la face (162) d'appui axial est sensiblement perpendiculaire à l'axe de révolution du distributeur, et est orientée vers l'amont ou vers l'aval.

12. Turbine basse-pression de turbomachine, **caractérisée en ce qu'**elle comprend au moins un distributeur sectorisé selon l'une des revendications précédentes.

13. Turbomachine, telle qu'un turboréacteur ou un turbopropulseur d'avion, **caractérisée en ce qu'**elle comprend au moins un distributeur sectorisé selon l'une des revendications 1 à 11.

## Patentansprüche

1. Sektorierte Leitschaufel für ein Turbotriebwerk, die aus zylindrischen Sektoren (112) gebildet ist, die auf Stoß aneinander geordnet sind und jeweils zwei koaxial verlaufende Sektoren von ringförmigen Plattformen (130) enthalten, die über im Wesentlichen radial verlaufende Schaufelblätter (114) miteinander verbunden sind, sowie einen ringförmigen Schienensektor (134) zum Tragen von Elementen (136) aus Abriebmaterial, wobei der Schienensektor radial innerhalb des inneren Plattformsektors (130) verläuft und mit der Innenfläche dieses Plattformsektors verbunden ist, wobei jeder Leitschaufelsektor an den Längsrändern des inneren Plattformsektors umfängliche Verbindungseingriffseinrichtungen enthält, die mit entsprechenden Einrichtungen zusammenwirken, die an einem benachbarten Leitschaufelsektor vorgesehen sind, **dadurch gekennzeichnet, dass** die Längsränder der inneren Plattformsektoren eine V-Form bilden.

2. Sektorierte Leitschaufel nach Anspruch 1, **dadurch gekennzeichnet, dass** der innere Plattformsektor (130) eines jeden Leitschaufelsektors (112) einen V-förmigen Längsrand mit einem Scheitelwinkel größer als 180° und einen entgegengesetzten Längsrand mit einem Scheitelwinkel kleiner 180° enthält.

3. Sektorierte Leitschaufel nach Anspruch 1 oder 2, **dadurch gekennzeichnet, dass** jeder Längsrand eines jeden inneren Plattformsektors (130) einen stromaufwärtigen Abschnitt (150), der im Wesentlichen parallel zur Umlaufachse der Leitschaufel verläuft, und einen stromabwärtigen Abschnitt (166) enthält, der schräg zu dieser Achse verläuft.

4. Sektorierte Leitschaufel nach Anspruch 3, **dadurch gekennzeichnet, dass** der schräg verlaufende, stromabwärtige Abschnitt (166) eines der Längsränder des inneren Plattformsektors (130) im Wesentlichen parallel zum stromabwärtigen Abschnitt der Außenseite des diesem Längsrand benachbarten Schaufelblatts (114) verläuft.

5. Sektorierte Leitschaufel nach Anspruch 3 oder 4, **dadurch gekennzeichnet, dass** der schräg verlaufende, stromabwärtige Abschnitt (166) eines Längsrands des inneren Plattformsektors (130) im Wesentlichen parallel zum schräg verlaufenden, stromabwärtigen Abschnitt des anderen Längsrands von diesem Plattformsektor verläuft.

6. Sektorierte Leitschaufel nach einem der vorangehenden Ansprüche, **dadurch gekennzeichnet, dass** der Schienensektor (134) eines jeden Leitschaufelsektors (112) an einem seiner umlaufenden Enden Anlegeeinrichtungen zum axialen Anlegen an dem Schienensektor eines benachbarten Leitschaufelsektors enthält.

7. Sektorierte Leitschaufel nach Anspruch 6, **dadurch gekennzeichnet, dass** der Schienensektor (134) im Querschnitt eine im Wesentlichen L-förmige Form hat und eine im Wesentlichen radial verlaufende Wand (138) enthält, die an ihrem Außenumfang mit der Innenfläche eines inneren Plattformsektors (130) und an ihrem Innenumfang mit einem Ende eines im Wesentlichen zylindrischen Wandsektors (140) verbunden ist, der Elemente (136) aus Abriebmaterial trägt, wobei die radialen Abstützeinrichtungen (160) dieses Schienensektors von seiner radialen Wand getragen werden.

8. Sektorierte Leitschaufel nach Anspruch 7, **dadurch gekennzeichnet, dass** die Anlegeeinrichtungen (160) an der stromaufwärtigen Seite der radial verlaufenden Wand (138) des Schienensektors (134) ausgebildet sind.

9. Sektorierte Leitschaufel nach Anspruch 7, **dadurch gekennzeichnet, dass** die Anlegeeinrichtungen (160) an der stromabwärtigen Seite der radial verlaufenden Wand (138) des Schienensektors (134) ausgebildet sind.

10. Sektorierte Leitschaufel nach einem der vorangehenden Ansprüche, **dadurch gekennzeichnet, dass** jeder Schienensektor (134) zumindest eine seitliche Lasche (160) enthält, die sich in Umfangsrichtung zu einem benachbarten Schienensektor (134) hin erstreckt und eine Anlegefläche (162) zum axialen Anlegen an diesem benachbarten Schienensektor enthält.

11. Sektorierte Leitschaufel nach Anspruch 10, **dadurch gekennzeichnet, dass** die Anlegefläche (162) zum axialen Anlegen im Wesentlichen senkrecht zur Umlaufachse der Leitschaufel verläuft und in Richtung stromaufwärts oder stromabwärts gerichtet ist.

12. Niederdruckturbine eines Turbotriebwerks, **dadurch gekennzeichnet, dass** sie zumindest eine sektorierte Leitschaufel nach einem der vorangehenden Ansprüche enthält.

13. Turbotriebwerk, wie etwa Turbostrahltriebwerk oder Turboprop-Triebwerk für Flugzeuge, **dadurch gekennzeichnet, dass** es zumindest eine sektorierte Leitschaufel nach einem der Ansprüche 1 bis 11 aufweist.

## Claims

1. A sectorized distributor for a turbomachine, formed of cylindrical sectors (112) placed end to end and each comprising two coaxial sectors of annular platforms (130) connected to each other by substantially radial blades (114), and an annular rail sector (134) supporting elements (136) of abradable material, the rail sector being radially inside the inner platform sector (130) and connected to the inner surface of this platform sector, each sector comprising on the longitudinal edges of the inner platform sector circumferential embedding means cooperating with corresponding means provided on an adjacent distributor sector, **characterized in that** the longitudinal edges of the inner platform sectors form a V .

2. A sectorized distributor according to claim 1, **characterized in that** the inner platform section (130) of each distributor sector (112) comprises an angle V-shaped longitudinal edge greater than 180 ° and an angled opposite longitudinal edge of less than 180 °.

3. A sectorized distributor according to claim 1 or 2, **characterized in that** each longitudinal edge of each inner platform sector (130) comprises an upstream portion (150) substantially parallel to the axis of revolution of the distributor and a downstream portion (166) oblique with respect to this axis.

4. A sectorized distributor according to claim 3, **characterized in that** the oblique downstream part (166) of one of the longitudinal edges of the inner platform sector (130) is substantially parallel to the downstream part of the extrados of the blade (114) adjacent said longitudinal edge.

5. A sectorized distributor according to claim 3 or 4, **characterized in that** the oblique downstream portion (166) of a longitudinal edge of the inner platform sector (130) is substantially parallel to the oblique downstream portion of the other longitudinal edge of this platform area.

6. A sectorized distributor according to one of the preceding claims, **characterized in that** the rail sector (134) of each distributor sector (112) comprises, at one of its circumferential ends, axial bearing means on the rail sector of an adjacent distributor sector.

7. A sectorized distributor according to claim 6, **characterized in that** the rail sector (134) has a substantially L-shaped cross-section and comprises a substantially radial wall (138) connected at its outer periphery to the inner surface of a flat sector (130) and at its inner periphery at one end of a substantially cylindrical wall sector (140) carrying elements (136) of abradable material, the axial bearing means (160) of this rail sector being carried by its radial wall.

8. A sectorized distributor according to claim 7, **characterized in that** the bearing means (160) are formed on the upstream face of the radial wall (138) of the rail sector (134).

9. A sectorized distributor according to Claim 7, **characterized in that** the bearing means (160) are formed on the downstream face of the radial wall (138) of the rail sector (134).

10. A sectorized distributor according to one of the preceding claims, **characterized in that** each rail sector (134) comprises at least one lateral lug (160) extending circumferentially towards an adjacent rail sector (134) and comprising a surface (162) for axial bearing on this adjacent rail sector.

11. A sectorized distributor according to claim 10, **characterized in that** the axial bearing surface (162) is substantially perpendicular to the axis of revolution of the distributor and is oriented upstream or downstream.

12. A turbomachine low-pressure turbine, **characterized in that** it comprises at least one sectorized distributor according to one of the preceding claims.

13. Turbomachine, such as a turbojet or an aircraft turboprop, **characterized in that** it comprises at least one sectorized distributor according to one of Claims 1 to 11.
